# EUROPÄISCHE PATENTSCHRIFT

(11) **EP 0 493 713 B1**
(45) Veröffentlichungstag und Bekanntmachung des Hinweises auf die Patenterteilung: **09.11.1994**
(21) Anmeldenummer: 91121214.0
(22) Anmeldetag: 11.12.1991
(51) Int. Cl.: E06B 9/00, E06B 5/00

(54) **Torabdichtung**
Dock seal
Etanchement de portail

(30) Priorität: 03.01.1991 DE 4100028; 19.01.1991 DE 4101523
(43) Veröffentlichungstag der Anmeldung: 08.07.1992
(73) Patentinhaber: GEBR. KOCH Gmbh & Co, D-32774 Lage (DE)
(72) Erfinder: Diepolder, Richard, W-4937 Lage (DE)
(74) Vertreter: Habbel, Hans-Georg, Dipl.-Ing.

(56) Entgegenhaltungen:
- GB-A- 1 509 935
- US-A- 4 805 362

## Beschreibung

Die Erfindung bezieht sich auf eine Torabdichtung gemäß dem Oberbegriff des Hauptanspruches.

Eine gattungsbildende Torabdichtung wird in dem DE-U-74 25 832 beschrieben, bei welcher aber die nach unten herabhängende Schürze an einem Rahmen angeordnet ist, der schwenkbar an der Gebäudewand gelagert ist und daher nur nach oben geschwenkt werden kann, wobei sich dabei natürlich die vom Rahmen herabhängende Schürze auch nach hinten bewegt. Sollte bei einer solchen Anordnung die Oberkante des heranfahrenden Wagens genau waagerecht gegen den Rahmen drücken, erfolgt hier eine Zerstörung entweder des Rahmens oder des Fahrzeuges.

Weiterhin wird in der US-PS 47 99 342 eine Torabdichtung beschrieben. Bei dieser bekannten Einrichtung bestehen die beiden seitlichen Rahmen aus Schaumstoffblöcken und auch die obere Abdichtung besteht einerseits aus einer Bespannung, d. h. einem Kunststoffgewebe oder einer Kunststoffolie, die aber an ihrer Unterseite durch einen dicken Schaumstoffblock versteift ist, der allseitig von einer Umhüllung umgeben ist. Die so gebildete obere Abdichtung ruht auf den seitlichen Rahmen auf, d. h. ist nicht unabhängig von den seitlichen Rahmen. Bei einer Verformung des einen oder anderen seitlichen Rahmens wird also die Halterung der oberen Abdichtung beeinflußt.

An der Vorderseite der block- oder balkenartigen oberen Abdichtung ist eine nach unten herabhängende, der Abdichtung dienende Schürze vorgesehen.

Bei einem durch einen Fahrzeugaufbau in Richtung auf die Gebäudewand einwirkenden Druck kann zwar der obere Schaumstoffbalken in Richtung auf die Gebäudewand nachgeben, aber nur in geringem Maße, wobei durch das Zusammenpressen des Schaumstoffes ein Verletzen der Bespannung zu erwarten ist.

Bei dieser bekannten Anordnung ist aber nicht sichergestellt, daß dann, wenn ein unter die obere Abdichtung gefahrenes Fahrzeug sich hochpumpt, die obere Abdichtung dem dann entstehenden, von unten nach oben gerichteten Druck nachgeben kann. Vielmehr ist zu erwarten, daß die obere Abdichtung an ihrer Unterseite an ihrem Anschluß an der Gebäudewand abreißt. Insbesondere ist die bekannte Einrichtung nicht geeignet, einem kombinierten Druck, der auf die Gebäudewand wirkt, und einem Druck, der nach oben wirkt, standzuhalten. Die Befestigung an zwei relativ starken, oberhalb der Gebäudeöffnung verlaufenden Querträgern ist ebenfalls unglücklich, da beim Hochpumpen eines Fahrzeuges die Fahrzeugkante unter diese Querträger gelangen kann und diese abreißt.

Der Erfindung liegt die Aufgabe zugrunde, eine Torabdichtung zu schaffen, bei der nicht nur die beiden seitlichen Rahmen, d. h. die Seitenabdichtungen, einem aus jeder Richtung angreifenden Druck nachgeben können, sondern bei welcher auch die obere Abdichtung unabhängig von den Bewegungen der Seitenteile nach oben und hinten nachgeben kann und danach in die Ausgangsstellung zurückkehrt, wobei auch in der Normalstellung die obere Abdichtung nicht von den beiden Seitenteilen getragen wird.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt wird vorgeschlagen, daß die obere Abdichtung aus einer einfachen Bespannung besteht, die einerseits an der Gebäudewand schwenkbar anschließt, wobei die Schwenkbarkeit z. B. allein schon durch die Materialwahl der Bespannung erreicht werden kann. Besteht z. B. die Bespannung aus einem einfachen, normalen Gewebe, kann dieses im Bereich der Anlenkung an der Gebäudewand jeder Drehbewegung entsprechend nachgeben. Zur Halterung dieser an der Gebäudewand ortsfest aber schwenkbar befestigten Bespannung dienen weiterhin vom Gebäude nach oben aus vorstehende Diagonallenker, die im vorderen Bereich der Bespannung, z. B. an einer Quertraverse, anschließen, die über die ganze Länge der Bespannung verläuft, so daß dadurch ein Durchhängen im mittleren Bereich vermieden wird. Diese Diagonallenker schließen schwenkbar am Gebäude an und an der Quertraverse, so daß nunmehr bei einem Druck in Richtung auf das Gebäude, die Diagonallenker um ihren Drehpunkt am Gebäude, an dem sie festgelegt sind, schwenken und dadurch die Bespannung im wesentlichen vertikal stellen. Einem Druck von unten geben die beiden die Bespannung tragenden Lenker ebenfalls nach, indem sie diese Schwenkbewegung ausführen, so daß also die obere Abdichtung bei Kontakt mit dem Heck oder dem Dach eines Fahrzeuges ausweichen kann.

Ein bevorzugtes Ausführungsbeispiel für die Diagonallenker ist der Einsatz von Teleskoplenkern, d. h. bei der Schwenkbewegung der Bespannung kann eine Verlängerung der Diagonallenker eintreten, so daß die Bespannung auch in der hochgeschwenkten Lage gespannt bleiben kann.

Durch die relativ schwere, an der vorderen Kante der Bespannung angeordnete Schürze wird bei Nachlassen des Druckes auf jeden Fall die Bespannung wieder nach unten gezogen, wobei die Diagonallenker eine entsprechende Schwenkbewegung ausführen. Sobald die Diagonallenker ihre Ursprungslage, nämlich schräg vom Gebäude nach oben hin ansteigend ausgerichtet, erreicht haben, wirken diese Diagonallenker als Träger oder Stützen, da eine weitere Schwenkbewegung aufgrund der Spannung der Bespannung nicht mehr möglich ist. Wenn die Diagonallenker als Teleskoplenker ausgebildet sind, ist in dieser Stellung das Teleskop auf seinen eingefahrenen Wert eingefahren, d. h. eine weitere Verkürzung des Teleskopes ist nicht möglich, sondern nur eine Verlängerung.

Ein Ausführungsbeispiel der Erfindung wird nachfolgend anhand der Zeichnungen erläutert.

Die Zeichnungen zeigen dabei in
- Fig. 1: schaubildlich eine Torabdichtung, in
- Fig. 2: eine Seitenansicht auf eine erste Ausführungsform eines Diagonallenkers, in
- Fig. 3: die Anordnung gemäß Fig. 2 im zurückgeschobenen Zustand, in
- Fig. 4: eine weitere Ausführungsform eines Diagonallenkers und in
- Fig. 5: die Anordnung gemäß Fig. 4 in angehobenem Zustand.

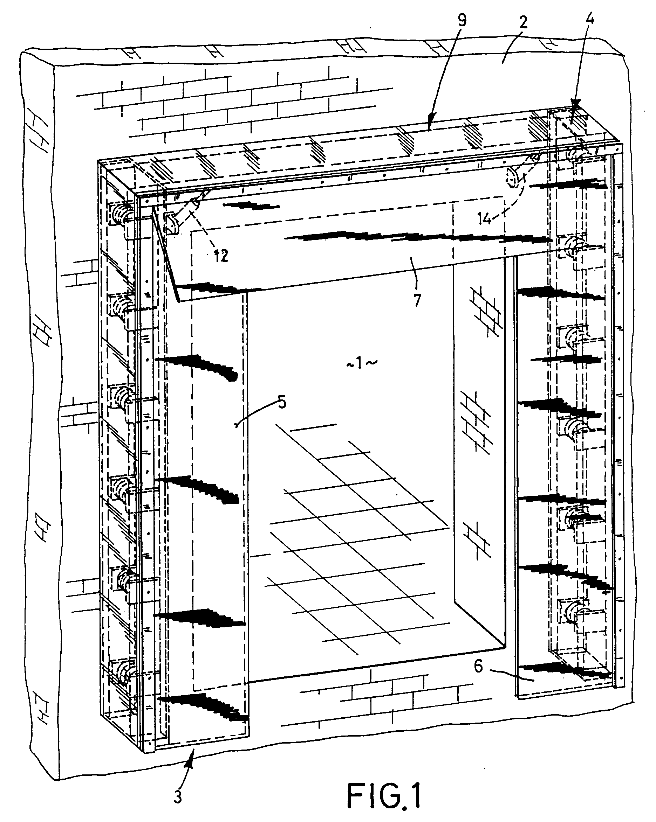

In Fig. 1 ist eine Öffnung 1 in einem Gebäude bezeichnet, von welchem eine Wandung 2 erkennbar ist. Beiderseits der Gebäudeöffnung 1 ist im Abstand von dieser die eigentliche Torabdichtung 3 vorgesehen, die im wesentlichen aus zwei Rahmen 4 besteht, die seitliche Schürzen 5 und 6 tragen sowie eine oberen Abdichtung 9, die eine obere Schürze 7 trägt. Die Schürzen 5, 6 und 7 reichen so weit in den lichten Raum der Gebäudeöffnung 1 hinein, daß bei einem Anfahren eines Fahrzeuges sich diese Schürzen 5, 6 und 7 abdichtend um den Fahrzeugaufbau legen und damit die Gebäudeöffnung 1 gegenüber der Außenatmosphäre im wesentlichen abdichten.

Die obere Abdichtung 9 besteht aus einer Bespannung 10, z. B. Gewebe- oder einer dicken Kunststoffmatte, die bei 11 an der Gebäudewand 2 festgelegt ist.

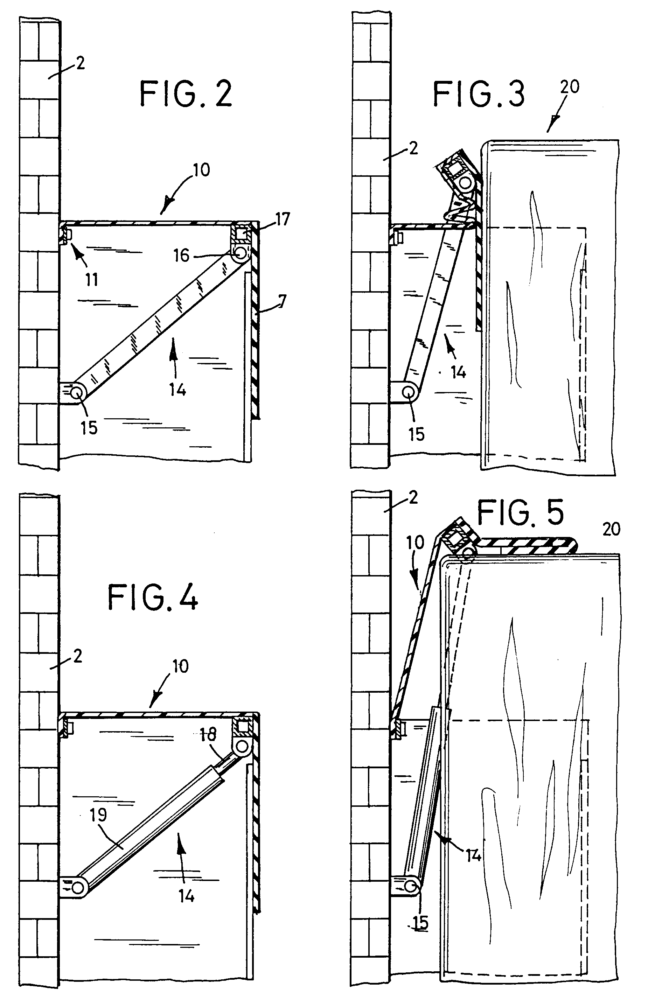

Diese Bespannung 10 wird von beiderseits der Gebäudeöffnung 1 angeordneten Diagonallenkern 12 und 14 getragen, von denen in den Fig. 2 bis 5 der Diagonallenker 14 erkennbar ist. Diese Diagonallenker 12, 14 sind bei 15 schwenkbar an der Gebäudewand 2 und bei 16 am vorderen Ende der Bespannung 10, vorzugsweise unter Zwischenschaltung einer Traverse 17, befestigt.

Bei den in den Fig. 4 und 5 dargestellten Beispielen bestehen die Diagonallenker 14 aus Teleskoplenkern, wobei die ausziehbare Kolbenstange 18 bei der Darstellung in Fig. 4 in der tiefsten Stellung innerhalb seines Zylinders 19 dargestellt ist. Bei der in Fig. 5 dargestellten Stellung ist die Kolbenstange 18 ausgezogen.

Die Fig. 2 und 3 verdeutlichen, wie ein Lastwagen 20, von dem das hintere Ende des Aufbaus dargestellt ist, vor die obere Bespannung, z. B. die Quertraverse 17, gefahren ist und dadurch die obere Bespannung nach hinten geschoben hat, wobei der Lenker 14 sich dabei um seinen gebäudeseitigen Anlenkpunkt 15 gedreht hat.

Hierbei ist es selbstverständlich möglich, auch für diesen Einsatzfall einen Teleskoplenker 14 einzusetzen, der aus den beiden Bauteilen 18 und 19 besteht.

Fig. 5 zeigt den Fall, daß ein Lastwagen 20 sich unter der Bespannung 10 aufpumpt und dadurch die Bespannung 10 anhebt. Dadurch, daß ein Teleskoplenker als Diagonallenker 14 eingesetzt ist, kann keine Beschädigung der Bespannung oder Traverse 17 erfolgen, wobei in Fig. 5 ein Fall dargestellt ist, in dem ein Lastwagen 20 sich auf eine in der Praxis ungewöhnliche Höhe aufgepumpt hat.

## Patentansprüche

1. Torabdichtung zwischen dem Rand einer Öffnung (1) eines Gebäudes und dem Heck eines an diese Gebäudeöffnung (1) herangefahrenen Fahrzeuges mit einer oberen, nach oben unabhängig von den seitlichen Rahmen (4) nachgiebigen, im wesentlichen horizontalen Abdichtung (9) und einer an dieser angeordneten, im Ruhezustand nach unten herabhängenden Schürze (7) sowie federnd nachgiebigen seitlichen Rahmen (4), dadurch gekennzeichnet, daß die Abdichtung als nachgiebige BeSpannung (10) ausgebildet ist und die BeSpannung (10) mit ihrer Schürze (7) von am Gebäude schwenkbar angreifenden und vom Gebäude aus ansteigenden Diagonallenkern (14) getragen ist, die mit ihrem vorderen oberen Ende an einer vorderen, mit der Bespannung verbundenen Quertraverse (17) anschließen.

2. Torabdichtung nach Anspruch 1, dadurch gekennzeichnet, daß eine hintere Quertraverse vorgesehen ist sowie die Bespannung (10) im Bereich der Gebäudewand schwenkbar ausgebildet ist.

3. Torabdichtung nach Anspruch 1 oder 2, dadurch gekennzeichnet, daß die Diagonallenker (14) als Teleskopstützen (Kolbenstange 18 und Zylinder 19) ausgebildet sind.

## Claims

1. A door seal between the edge of an opening (1) in a building and the rear of a vehicle driven up to this building opening (1), comprising an upper, substantially horizontal seal (9), non-rigid at the top independently of the lateral frames (4), and an apron (7) arranged thereon and hanging down when non-operative as well as elastically non-rigid lateral frames (4), characterized in that the seal is constructed as a non-rigid covering (10) and the covering (10) with its apron (7) is supported by diagonal rods (14) engaging swivellably with the building and rising from the building, which diagonal rods (14) adjoin with their upper, front ends a front transverse beam (17) connected with the covering.

2. A door seal according to claim 1, characterized in that a rear transverse beam is provided and the covering (10) is of swivellable construction in the area of the building wall.

3. A door seal according to claim 1 or claim 2, characterized in that the diagonal rods (14) are constructed as telescopic supports (piston rod 18 and cylinder 19).

## Revendications

1. Dispositif pour l'étanchéité d'un portail entre le bord d'une ouverture (1) d'un bâtiment et l'arrière d'un véhicule conduit vers cette ouverture de bâtiment (1) avec une partie d'étanchéité supérieure (9) sensiblement horizontale, cédant vers le haut indépendamment des cadres latéraux (4), et un tablier (7) disposé sur celle-ci et pendant vers le bas au repos ainsi que des cadres latéraux (4) cédant de manière élastique, caractérisé en ce que le dispositif d'étanchéité est conçu comme une garniture tendue (10) souple et la garniture tendue (10) est portée avec son tablier (7) par des guides diagonaux (14) se mettant en prise de manière pivotante sur le bâtiment et s'élevant à partir du bâtiment, qui se raccordent par leur extrémité antérieure supérieure sur une traverse (17) antérieure reliée à la garniture tendue.

2. Dispositif pour l'étanchéité d'un portail selon la revendication 1, caractérisé en ce qu'une traverse postérieure est prévue et la garniture tendue (10) est conçue de manière pivotante dans la zone de la paroi du bâtiment.

3. Dispositif pour l'étanchéité d'un portail selon la revendication 1 ou 2, caractérisé en ce que les guides diagonaux (14) sont conçus comme des appuis télescopiques (tige de piston 18 et cylindre 19).
